**Europäisches Patentamt**

**European Patent Office**

**Office européen des brevets**

(19)

(11) Veröffentlichungsnummer: **0 133 475**
**B1**

(12) **EUROPÄISCHE PATENTSCHRIFT**

(45) Veröffentlichungstag der Patentschrift: **06.06.90**

(51) Int. Cl.⁵: **B 29 C 45/82**

(21) Anmeldenummer: **84107814.0**

(22) Anmeldetag: **05.07.84**

(54) **Hydraulische Steuereinrichtung.**

(30) Priorität: **03.08.83 DE 3327947**

(43) Veröffentlichungstag der Anmeldung:
**27.02.85 Patentblatt 85/09**

(45) Bekanntmachung des Hinweises auf die
Patenterteilung:
**06.06.90 Patentblatt 90/23**

(84) Benannte Vertragsstaaten:
**AT CH DE FR IT LI**

(56) Entgegenhaltungen:
FR-A-2 327 464
FR-A-2 354 464
FR-A-2 472 969

ÖLHYDRAULIC UND PNEUMATIC, Band 23, Nr.
3, März 1979, Seiten 175-182; H. BLÜML:
"Hydraulische Steuerungen moderner
Spritzgiessmaschinen"

(73) Patentinhaber: **ROBERT BOSCH GMBH
Postfach 50
D-7000 Stuttgart 1 (DE)**

(72) Erfinder: **Tittmann, Egon, Dipl.-Ing.
Stuttgarter Strasse 23/2
D-7250 Leonberg (DE)**
Erfinder: **Walter, Heinz, Ing. grad.
Blumenstrasse 41
D-7255 Rutesheim (DE)**

Courier Press, Leamington Spa, England.

EP 0 133 475 B1

**Beschreibung**

Die Erfindung geht aus von einer hydraulischen Steuereinrichtung nach der Gattung des Hauptanspruchs. Es ist schon eine solche Steuereinrichtung aus der DE—AS 25 23 303 bekannt, bei welcher zur Staudruckregelung in einem Spritzzylinder einer Kunststoff-Spritzgießmaschine in eine vom Spritzzylinder zum Tank führende Abzweigleitung ein 2 Wege-Einbauventil geschaltet ist, das von einem willkürlich verstellbaren Proportional-Vorsteuerventil ansteuerbar ist. Mit einem solchen Vorsteuerventil sind einer Druckregelung nach unten hin Grenzen gesetzt, die abhängig vom Steueröl in der Regel bei einem Minimaldruck von etwa 5 ber liegen.

Um deshalb bei Bedarf den Staudruck unter diesen Grenzdruck senken zu können, ist dem Einbauventil für die Druckbegrenzungsfunktion eine zusätzliche Ventilpatrone mit zugeordnetem Vorsteuerventil parallel geschaltet. In der Abzweigleitung liegen somit im Arbeitsdruckmittelstrom zwei Ventilpatronen, die zusammen mit ihrer Steuerseite zu einer relativ aufwendigen Bauweise führen. Von Nachteil bei dieser Steuereinrichtung ist ferner, daß sie als Einbeuventil für die Druckfunktion eine Sitzventilpatrone mit unterschiedlich großen wirksamen Flächen verwendet, die von einer Feder in Richtung Schließstellung belastet ist und im Inneren eine Drosselstelle zum Ableiten von Steuerdruckmittel aufweist. Weiterhin muß bei dieser Steuereinrichtung darauf geachtet werden, daß während der Spritzdruckphase das in der Abzweigleitung liegende Sperrventil geschlossen ist. Nachteilig ist ferner ein Kennliniensprung zwischen Null bar und minimalem Staudruck. Ferner ist ein zusätzlicher Block- und Fertigungseufwand notwendig.

Die erfindungsgemäße hydraulische Steuereinrichtung mit den kennzeichnenden Merkmalen das Hauptanspruchs hat demgegenüber den Vorteil, daß sie bei verringertem Aufwand vor allem in einem Grenzbereich von Null bar eine genauere und bessere Drucksteuerung erlaubt. So kann mit dieser Steuereinrichtung ein Staudruck von Null bar bis zu einem Maximalwert von ca. 50 bar geregelt werden, wobei die Kennlinie einen stetigen Verlauf aufweist. Dabei ist dies unabhängig davon erreichbar, daß das Proportional-Vorsteuerventil nur einen minimalen Steuerdruck von ca. 5 bar erreichen kann. Zudem kann die Steuereinrichtung in vorteilhafterweise in eine komplexe Steuerung mit vielfältigen Funktionen integriert werden, wobei neben der Druckfunktion auch eine Sperrfunktion ausgeführt wird, wie dies z.B. während der Einspritzphase in einer Kunststoff-Spritzgießmaschine erforderlich ist. Zudem kann die Steuereinrichtung so verwendet werden, daß sie als vorgesteuertes Druckbegrenzungsventil arbeitet, wie dies bei einem schnellen Druckabbau beim Umschalten von einer Spritzdruckphase auf eine Nachdruckphase erforderlich ist. Darüber hinaus führt die Steuereinrichtung zu einem wesentlich kompakter bauenden Steuerblock.

Durch die in den Unteransprüchen aufgeführten Maßnahmen sind vorteilhafte Weiterbildungen und Verbesserungen der im Hauptanspruch angegebenen Steuereinrichtung möglich. Weitere besonders zweckmäßige Ausgestaltungen ergeben sich aus der Beschreibung und der Zeichnung.

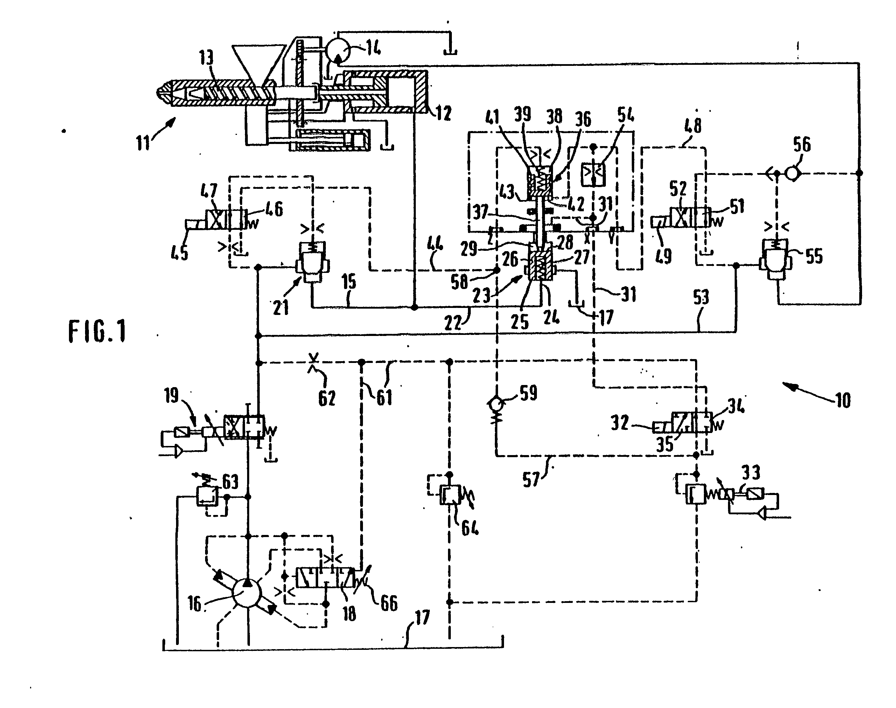

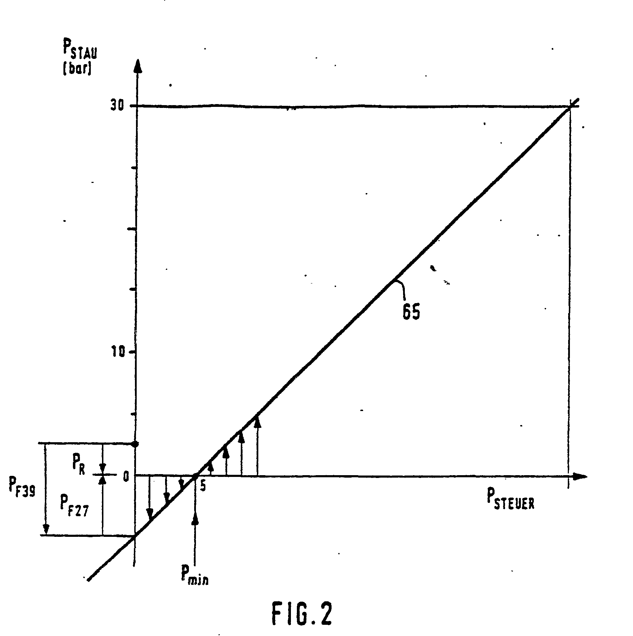

Ein Ausführungsbeispiel der Erfindung ist in der Zeichnung dargestellt und in der nachfolgenden Beschreibung näher erläutert. Es zeigen Figur 1 eine hydraulische Steuereinrichtung im Zusammenhang mit der Spritzeinheit einer Kunststoff-Spritzgießmaschine in vereinfachter Darstellung und Figur 2 eine Druckkennlinie der Steuereinrichtung nach Figur 1.

Die Figur 1 zeigt eine hydraulische Steuereinrichtung 10 zur Steuerung der Spritzeinheit einer nicht näher gezeichneten Kunststoff-Spritzgießmaschine. Die Spritzeinheit 11 weist in an sich bekannter Weise einen Spritzzylinder 12 für die Längsbewegungen einer Plastifizierschnecke 13 sowie einen Hydromotor 14 für deren Drehbewegungen auf.

Der Spritzzylinder 12 steht über eine Zuführleitung 15 mit dem Ausgang einer regelbaren Verstellpumpe 16 in Verbindung, die Druckmittel aus einem Tank 17 ansaugt und der in an sich bekannter Weise ein Regler 18 zugeordnet ist. Zur Steuerung der über die Zuführleitung 15 fließenden Druckmittelmenge zum Spritzzylinder 12 ist stromabwärts von der Verstellpumpe 16 ein Proportional-Drosselventil 19 geschaltet. Ferner liegt in der Zuführleitung 15 stromabwärts vom Drosselventil 19 ein vorgesteuertes, els 2 Wege-Einbeuventil ausgebildetes Sperrventil 21. Parallel zum Sperrventil 21 führt vom Spritzzylinder 12 eine Abzweigleitung 22 zum Tank 17, in die ein primär der Drucksteuerung dienendes, als 2 Wegeventil ausgebildetes Einbauventil 23 gescheltet ist. Des Einbeuventil 23 ist im wesentlichen els Druckwaagepatrone mit gleich großen, stirnseitigen Druckflächen ausgebildet. Auf seiner, einem Arbeitsanschluß 24 für geregelten Druck zugewandten ersten Druckfläche 25 ist das Schließglied 26 von einer ersten Feder 27 zusätzlich belastet. Der Druck im Arbeitsanschluß 24 sowie die Kraft der Feder 27 versuchen das Schließglied 26 in eine Offenstellung zu drücken, in welcher das Schließglied 26 die Verbindung zum Tank 17 aufsteuert. Die am Schließglied 26 am entgegengesetzten Ende ausgebildete, zweite Druckfläche 28 begrenzt einen Steuerraum 29, von dem eine erste Steuerleitung 31 abgeht. Diese erste Steuerleitung 31 führt über ein erstes Umschaltventil 32 zu einem willkürlich verstellbaren Proportional-Drucksteuerventil 33, das zur zentralen Drucksteuerung dient. Das erste Umschaltventil 32 unterbricht in seiner federzentrierten Grundstellung 34 die erste Steuerleitung 31, während es in seiner elektromagnetisch betätigten Arbeitsstellung 35 die erste Steuerleitung 31 aufsteuert und damit die Verbindung zum proportionel-Drucksteuerventil 33 herstellt.

Koaxiel zum Schließglied 26 ist dem Einbauventil 23 ein Entsperrkolben 36 zugeordnet, der mit einem Stößel 37 in den Steuerraum 29 des Einbauventils 23 ragt. Der Entsperrkolben 36 begrenzt auf seiner vom Einbauventil 23 abgewandten Seite einen ersten Druckraum 38, der zugleich eine zweite Feder 39 aufnimmt. Der Entsperrkolben 36 wird somit auf seiner ersten Druckfläche 41 vom Druck im Druckraum 38 als auch von der Kraft der Feder 39 in Richtung zum Einbauventil 23 hin beaufschlagt. Entgegengesetzt zur ersten Druckfläche 41 ist am Entsperrkolben 36 eine ringförmige zweite Druckfläche 42 ausgebildet, welche einen zweiten Druckraum 43 begrenzt, deren Druck den Entsperrkolben 36 gegen die Kraft der zweiten Feder 39 vom Einbauventil 23 weg belastet. Die erste Druckfläche 41 am Entsperrkolben 36 ist genauso groß ausgebildet wie die Druckflächen 25, 28 em Schließglied 26.

Von dem ersten Druckraum 38 führt eine zweite Steuerleitung 44 zu einem zweiten Umschaltventil 45, das in seiner federzentrierten Grundstellung 46 die zweite Steuerleitung 44 zum Tank 17 entlastet und durch elektromagnetische Betätigung in eine Arbeitsstellung 47 bringbar ist, in der es die zweite Steuerleitung 44 mit der Zuführleitung 15 stromeufwärts vom Sperrventil 21 verbindet.

Vom zweiten Druckraum 43 des Entsperrkolbens 36 führt eine dritte Steuerleitung 48 zu einem dritten Umschaltventil 49, das in seiner federzentrierten Grundstellung 51 die dritte Steuerleitung 48 zum Tank 17 entlastet. In einer Arbeitsstellung 52 verbindet das dritte Umschaltventil 49 die dritte Steuerleitung 48 mit einer Zulaufleitung 53, welche von der Zuführleitung 15 im Bereich zwischen Drosselventil 19 und Sperrventil 21 abzweigt und zum Hydromotor 14 führt. Zwischen die dritte Steuerleitung 48 und die erste Steuerleitung 31 ist eine den Steuerölstrom begrenzende Drosselstelle 54 geschaltet, so daß über sie der zweite Druckraum 43 mit dem Steuerraum 29 Verbindung hat.

In die Zulaufleitung 53 ist stromabwärts von der Abzweigung der dritten Steuerleitung 48 eine als Zweiwegeventil ausgebildete, vorsteuerbare Ventilpatrone 55 eingebaut, die zusätzlich vom dritten Umschaltventil 49 vorgesteuert wird, um derart den Druckmittelstrom zum Hydromotor 14 zu steuern. Dabei kann die Ventilpatrone 55 zusammen mit einem im Steuerkreis liegenden Wechselventil 56 els Rückschlagventil arbeiten.

Der Eingeng des Proportional-Drucksteuerventils 33 ist ferner über eine vierte Steuerleitung 57 mit einem Punkt 58 in der zweiten Steuerleitung 44 verbunden, der zwischen erstem Druckraum 38 und zweitem Umschaltventil 45 liegt. Zudem ist in die vierte Steuerleitung 57 ein Rückschlagventil 59 geschaltet, das zum vorsteuernden Druckregelventil 33 hin öffnet.

Vom ersten Umschaltventil 32 führt eine fünfte Steuerleitung 61 zum Regler 18 der Verstellpumpe 16. Die fünfte Steuerleitung 61 ist in der Grundstellung 34 des ersten Umscheltventils 32 mit dem Eingang des Druckregelventils 33 verbunden, während in der entsprechenden Arbeitsstellung 35 diese Steuerleitung 61 unterbrochen ist. Die fünfte Steuerleitung steht ferner über eine Drossel 62 mit der Zuführleitung 21 in Verbindung.

Das in die zweite Steuerleitung 44 geschaltete zweite Umschaltventil 45 dient zudem auch als Vorsteuerventil für das Sperrventil 21. So steuert das zweite Umschatventil 45 in seiner Grundstellung 46 das Sperrventil 21 zu, während es in seiner Arbeitsstellung 47 des Sperrventil 21 öffnet.

Zur Druckabsicherung im Arbeitskreis sowie im Vorsteuerkreis dienen Druckbegrenzungsventile 63, 64.

Die Wirkungsweise der hydraulischen Steuereinrichtung 10 wird wie folgt erläutert, wobei der grundsätzliche Ablauf von Staudruckphese, Spritzdruckphese und Nachdruckphase bei einer Kunststoff-Spritzmaschine als an sich bekannt vorausgesetzt wird, ebenso die Funktion der Verstellpumpe 16.

Nach der Herstellung eines Spritzlings wird über einen Trichter der plastifizier- und Einspritzschnecke 13 Granulat zugeführt, das von der Schnecke 13, die von dem Hydromotor 14 in Rotation versetzt wird, plastifiziert und in den sogenannten plastifizierraum zwischen der Öffnung und der Stirnfläche der Schnecke 13 transportiert wird. Während dieses Plastifiziervorganges wird durch den sich aufbauenden Druck, den sogenannten Staudruck, die Schnecke 13 einschließlich des Kolbens im Spritzzylinder 12 von der Spritzöffnung wegbewegt, d.h. in Figur 1 nach rechts. Dabei wird Druckmittel aus dem Spritzzylinder 12 über die Abzweigleitung 22 zum Tank 17 verdrängt. Die Größe des hierbei im Spritzzylinder 12 wirkenden Staudrucks wird von dem Einbauventil 23 in Verbindung mit dem vorsteuernden Drucksteuerventil 33 in einem Bereich von Null bis maximal 50 bar geregelt. Wenn nach Beendigung der Staudruckphase die Schnecke 13 ihre rechte Endstellung erreicht hat, wird der Druckraum des Spritzzylinders 12 über die Zuführleitung 15 mit dem Spritzdruck beaufschlagt, so daß die Schnecke 13 eine Bewegung in entgegengesetzter Richtung ausführt und dabei das plestifizierte Meteriel in eine Spritzgießform einspritzt. Vor dem Erreichen der Endstellung wird dabei schließlich auf Nachdruck umgeschaltet, unter dem sich die Schnecke 13 wieder in ihre andere Endstellung bewegt.

Des Plastifizieren während der Staudruckphase wird eingeleitet durch Öffnen der Ventilpatrone 55. Dies wird durch Betätigen des dritten Umschaltventils 49 in seine Arbeitsstellung 52 erreicht. Zusammen mit dem Wechselventil 56 im zugehörigen Steuerkreis kann dabei die Ventilpatrone 55 wie ein Rückschlegventil arbeiten. Bei geöffneter Ventilpatrone 55 kann der von der Verstellpumpe 16 geförderte Druckmittelstrom, dessen Größe am proportional-Drosselventil 19 eingestellt wird, über die Zulaufleitung 53 zum Hydromotor 14 strömen und die Plastifizierstrecke 13 in Rotation versetzen. Das infolge einer Rechtsbewegung der Schnecke 13 aus dem Spritzzylinder 12 verdrängte Druckmittel kann nur über die Abzweigleitung 22 zum Tank 17 abströmen, da das Sperrventil 21 in der Zuführleitung 15 geschlossen ist. Die Größe des Staudrucks im Spritzzylinder 12 wird dabei vom Schließglied 26 des Einbauventils 23 geregelt, welches über das Proportional-Drucksteuerventil 33 vorgesteuert wird.

Im Normalzustand bei fehlenden Steuerdrücken bzw. fehlendem Staudruck in dem Arbeitsanschluß 24 liegt der Entsperrkolben 36 mit seinem Stößel 37 am Schließglied 26 des Einbeuventils 23 an und drückt es gegen die Kraft der ersten Feder 27 in seine Sperrstellung, da die stärkere Kraft der zweiten Feder 39 überwiegt. Beim Betätigen des dritten Umschaltventil 49 wird zugleich die dritte Steuerleitung 48 mit der Zulaufleitung 53 verbunden, so daß sich ein Steuerdruck von letzterer über das dritte Umschaltventil 49 und die Steuerleitung 48 im zweiten Druckraum 43 des Entsperrkolbens 36 aufbauen kann. De der erste Druckraum 38 über die zweite Steuerleitung 44 und das zweite Umschaltventil 45 zum Tank 17 entlastet ist, wird der Entsperrkolben 36 durch den Steuerdruck gegen die Kraft der zweiten Feder 39 bis zum gehäusefesten Anschlag nach oben verschoben, wobei der Stößel 37 vom Schließglied 26 entkoppelt wird. Zugleich gelangt von der dritten Steuerleitung 48 über die Drosselstelle 54, die auch als Strombegrenzungsventil ausgebildet sein kann, ein Steuerölstrom in die erste Steuerleitung 31 und weiter über das in Arbeitsstellung 35 geschaltete, erste Umschaltventil 32 zum Eingang des Drucksteuerventils 33. Der vom Proportional-Vorsteuerventil 33 vorgewählte Druck baut sich somit über die erste Steuerleitung 31 auch im Steuerreum 29 auf und beaufschlagt dort die zweite Druckfläche 28 des Schließgliedes 26, das auf seiner gegenüberliegenden, gleich großen ersten Druckfläche 25 vom Staudruck im Arbeitsanschluß 24 sowie von der Kraft der ersten Feder 27 beaufschlegt wird. Mit dem als Druckwaagepatrone ausgebildeten Einbauventil 23 kann somit der Staudruck geregelt werden. Hierbei verhindert das Rückschlagventil 59 in der vierten Steuerleitung 57, daß sich der vom Drucksteuerventil 33 aufgebaute Steuerdruck über die vierte (57) und die zweite Steuerleitung 44 im ersten Druckraum 38 des Entsperrkolbens 36 aufbauen kann.

Die Figur 2 zeigt ein Diagramm, in dem der Zusammenhang zwischen dem Staudruck am Arbeitsanschluß 24 des Einbauventils 23 und dem Steuerdruck am Drucksteuerventil 33 näher dargestellt ist. Dabei ist auf der Ordinete der Staudruck und auf der Abszisse der Steuerdruck angegeben. Wie dabei die Kennlinie 65 verenschaulicht, kann selbst bei einem minimalen Steuerdruck von ca. 5 bar, der seinerseits abhängig ist vom verfügbaren Steuerölstrom, der Staudruck bis auf Null bar heruntergeregelt werden. Erreicht wird dies dadurch, daß das Schließglied 26 durch die resultierende Druckkraft $P_R$ aus den unterschiedlich starken Federn 27 und 39 in Sperrstellung gehalten wird, während bei Staudruckphase der entkoppelte Entsperrkolben 36 die Wirkung der zweiten Feder 39 aufhebt.

Am Ende der Staudruckphase wird der Plastifiziervorgang beendet, indem das dritte Umschaltventil 49 in seine Grundstellung 51 zurückgestellt wird, wodurch die zugeordnete Ventilpatrone 55 die Verbindung zum Hydromotor 14 sperrt. Gleichzeitig wird die Spritzdruckphase eingeleitet, indem das zweite Umschaltventil 45 in seine Arbeitsstellung 47 verstellt wird. Dadurch wird einmal des Sperrventil 21 geöffnet und zum anderen wird die zweite Steuerleitung 44 mit der Zuführleitung 15 verbunden. Gleichzeitig wird auch des erste Umschaltventil 32 entregt, so daß in dessen Grundstellung 34 das Proportional-Drucksteuerventil 33 über die fünfte Steuerleitung 61 auf den Regler 18 der Verstellpumpe 16 einwirken kann.

Die Verstellpumpe 16 fördert somit einen Druckmittelstrom über das Drosselventil 19 und das offene Sperrventil in den Spritzzylinder 12, wobei die Druckmittelmenge vom Drosselventil 19 und die Größe des Spritzdruckes vom Drucksteuerventil 33 gesteuert werden. Während der Spritzdruckphase muß das Einbauventil 23 die Abzweigleitung 22 sperren. Der im Arbeitsanschluß 24 herrschende Spritzdruck kann deshalb zusätzlich auch über des geöffnete zweite Schaltventil 45 und die zweite Steuerleitung 44 sich im ersten Druckraum 38 des Entsperrkolbens 36 aufbeuen. Da die erste Druckfläche 41 am Entsperrkolben 36 und die erste Druckfläche 25 am Schließglied 26 gleich groß sind, ist das Gebilde aus Schließkörper 26 und Entsperrkolben 36 druckausgeglichen. Infolge der überwiegenden Kraft der stärkeren Feder 39 wird somit das Schließglied 26 in seiner Sperrstellung gehalten. Während der Spritzdruckphese sind zugleich der zweite Druckraum 43 über die dritte Steuerleitung 48 und das dritte Umschaltventil 49 sowie der Steuerraum 29 über die erste Steuerleitung 31 und die Drosselstelle 54 zum Tank 17 entlastet. Während der Spritzdruckphase übt somit das Schließglied 26 in Verbindung mit dem Entsperrkolben 36 eine Wegefunktion aus, indem es die Verbindung vom Spritzzylinder 12 über die Abzweigleitung 22 zum Tank 17 sperrt.

Um zu verhindern, daß sich beim Herunterregeln des Spritzdruckes das Schließglied 26 des Einbauventils 23 öffnet, indem es zusammen mit dem Entsperrkolben 36 und dem Drucksteuerventil 33 als vorgesteuertes Druckbegrenzungsventil zusammenarbeitet, muß bei der Steuereinrichtung 10 folgende Druckbeziehung eingehalten weiden. So muß das von der Reglerfeder 66 am Regler 18 der Verstellpumpe 16 verursachte Druckgefälle stets kleiner sein als die Summe derjenigen Druckgefälle, die vom Rückschlagventil 59 und von den unterschiedlich starken Federn 27 und 39 verursacht werden. Dieses Druckgefälle infolge der unterschiedlich starken Federn ist in Figur 2 els Druckwert $P_R$ dargestellt. Wenn diese Druckbeziehung eingehalten wird, kann das Senken des Einspritzdruckes in energiesparender Weise durch Herabregeln der Verstellpumpe 16 erreicht werden.

Wird am Ende der Spritzdruckphase auf Nachdruck geschaltet, der in der Regel kleiner als der Spritzdruck ist, dann fließt vom Spritzzylinder 12 kurzzeitig über das Einbauventil 23 Kompressionsvolumen zum Tank 17 ab. Dies wird dadurch erreicht, daß der Punkt 58 in der zweiten Steuerleitung 44 über die vierte Steuerleitung 57 mit dem Rückschlagventil 59 an den Eingang des Proportional-Drucksteuerventeils 33 angeschlossen ist. Das Drucksteuerventil 33 kann somit über die vierte (57) und einen Teil der zweiten Steuerleitung 44 den Druck im ersten Druckraum 38 des Entsperrkolbens 36 beeinflussen, so daß des Schließglied 26 mit dem Entsperrkolben 36 und dem Drucksteuerventil 33 als vorgesteuertes Druckbegrenzungsventil zusammenarbeiten kann.

Selbstverständlich sind Änderungen an der gezeigten Ausführungsform möglich, ohne vom Gedanken der Erfindung abzuweichen. Obwohl die gezeigte Staudruckregelpatrone aus Einbauventil 23 und Entsperrkolben 36 besonders vorteilhaft in einer Steuereinrichtung einer Spritzeinheit bei Kunststoff-Spritzgießmaschinen verwendbar ist, kann diese Staudruckregelpatrone auch in enderen Maschinen wie z.B. Pressen verwendet werden, wo ähnliche Funktionen gesteuert werden sollen.

Durch die Ausbildung des Einbauventils 23 als Druckwaagepatrone kann in Verbindung mit dem Entsperrkolben 36 eine kombinierte Druck-Wegefunktion gesteuert werden, wobei lediglich ein einziges Schließglied 26 im Arbeitskreis liegt. Die Staudruckregelpatrone kann ohne weiteres auch so verwendet werden, daß ein Proportional-Drucksteuerventil em Steuerausgang X für die erste Steuerleitung 31 angeschlossen wird, während an den Steuerausgängen Z, Y für die zweite (44) bzw. dritte Steuerleitung 48 geeignete Schaltventile angeschlossen werden, welche die Steuerkreise in geeigneter Weise mit Steuerdruckmittel versorgen und entlasten. Obwohl die gezeigte Ausführungsform der Staudruckregelpatrone mit von den Federn gegeneinander gedrückten Bauelementen besonders vorteilhaft ist, könnte ein Entsperrkolben auch so ausgebildet werden, daß das Schließglied 26 von ihm in seine Sperrstellung gezogen wird, wobei die beiden Federn die beiden beweglichen Bauelemente auseinanderdrücken. Selbstverständlich kann anstelle der Drosselstelle 44 auch ein Stromregelventil verwendet werden.

## Patentansprüche

1. Hydraulische Steuereinrichtung zur Steuerung eines hydraulisch betätigten Arbeitszylinders, in dessen vom Arbeitszylinder zum Tank führenden Abzweigleitung ein zur Druckregelung im Arbeitszylinder dienendes 2 Wege-Einbauventil geschaltet ist, das über eine erste Steuerleitung von einem Proportional-Drucksteuerventil vorsteuerber ist und mit Mitteln zur Wegesteuerung zwischen dem Arbeitszylinder und dem Tank sowie mit einer Drosselstelle, über welche Steuerdruckmittel in die erste Steuerleitung und zum Proportional-Drucksteuerventil gelangen kann, dadurch gekennzeichnet, daß das Einbauventil (23) als Druckwaagepatrone mit mindestens annähernd gleich großen, stirnseitigen Druckflächen (25, 28) ausgebildet ist, dessen Schließkörper (26) vom zu regelnden Druck im Arbeitsanschluß (24) und von einer Feder (27) in Richtung Offenstellung und vom Druck in der ersten Steuerleitung (31) und damit im Steuerraum (29) in Richtung Sperr stellung beaufschlagber ist, daß dem Schließkörper (26) ein von einer zweiten Feder (39) belasteter Entsperrkolben (36) zugeordnet ist, der zwei mit einer zweiten (44) bzw. einer dritten Steuerleitung (38) verbundene Druckräume (38, 43) begrenzt, die abwechselnd so mit Steuerdruckmittel beaufschlagbar sind, daß bei mit dem Schließkörper (26) gekoppeltem Entsperrkolben (36) die stärkere zweite Feder (39) den Schließkörper (26) für die Wegefunktion in Sperrstellung hält, während bei vom Schließkörper (26) entkoppeltem Entsperrkolben (36) über die erste Steuerleitung (31) vom Proportional-Druckventil (33) aus die Druckfunktion steuerber ist.

2. Hydraulische Steuereinrichtung nach Anspruch 1, dadurch gekennzeichnet, daß die von der zweiten Feder (39) belastete, erste Druckfläche (41) des Entsperrkolbens (36) mindestens nahezu gleich groß ist wie die Druckflächen (25, 28) em Schließkörper (26) der Druckwaagepatrone (23).

3. Hydraulische Steuereinrichtung nach Anspruch 1 oder 2, dadurch gekennzeichnet, daß die Drosselstelle (54) zwischen erster (31) und dritter Steuerleitung (48) liegt.

4. Hydraulische Steuereinrichtung nach einem der Ansprüche 1 bis 3, dadurch gekennzeichnet, daß die erste Steuerleitung (31) mit dem Drucksteuerventil (33) und die zweite und dritte Steuerleitung (44, 48) wenigstens über jeweils ein Umschaltventil (45, 49) mit einer den Zulaufdruck führenden Leitung (15, 53) verbindbar sind.

5. Steuervorrichtung nach einem oder mehreren der Ansprüche 1 bis 4, gekennzeichnet durch die Verwendung für die Einspritzeinheit (11) einer Kunststoff-Spritzgießmaschine zum Steuern unterschiedlicher Hydraulikdrücke im Spritzzylinder (12), der die Plastifizierund Einspritzschnecke (13) betätigt.

6. Steuervorrichtung nach einem der Ansprüche 1 bis 5, dadurch gekennzeichnet, daß in die erste Steuerleitung (31) ein erstes Umschaltventil (32) geschaltet ist und daß parallel zur ersten Steuerleitung (31) mit dem Umschaltventil (32) eine vierte Steuerleitung (57) vom Drucksteuerventil (33) über ein zu letzterem hin öffnendes Rückschlagventil (59) in den der zweiten Feder (39) zugeordneten, ersten Druckraum (38) des Entsperrkolbens (36) führt.

7. Steuervorrichtung nach einem der Ansprüche 1 bis 6, dadurch gekennzeichnet, daß von dem der Feder (39) gegenüberliegenden Druckraum (43) des Entsperrkolbens (36) die dritte Steuerleitung (48) abgeht, die von einem dritten Umschaltventil (49) zum Tank (17) entlastbar oder mit dem Druck in einer Zulaufleitung (53) beaufschlegbar ist.

8. Steuervorrichtung nach einem der Ansprüche 5 bis 7, dadurch gekennzeichnet, daß das dritte Umschaltventil (49) zugleich eine Ventilpatrone (55) in einer parallelen Zuleitung (53) steuert, die zu einem Hydromotor (14) für die Rotationsbewegung der Einspritzschnecke (13) führt.

9. Steuervorrichtung nach einem der Ansprüche 5 bis 8, dadurch gekennzeichnet, daß von dem der zweiten Feder (39) zugeordneten Druckraum (38) die zweite Steuerleitung (44) zu einem zweiten Umschaltventil (45) führt, das letztere mit einem Tank (17) oder einer Zuführleitung (15) verbinden kann.

10. Steuervorrichtung nach einem der Ansprüche 4 bis 9, dadurch gekennzeichnet, daß das zweite Umscheltventil (45) zugleich als Vorsteuerventil für ein als 2 Wege-Einbauventil ausgebildetes Sperrventil (21) dient, das in eine zum Arbeitszylinder (12) führende Zuführleitung (15) geschaltet ist.

11. Steuervorrichtung nach einem oder mehreren der Ansprüche 1 bis 10 mit einer druckgeregelten Verstellpumpe, dadurch gekennzeichnet, daß das erste Umschaltventil (32) zugleich eine fünfte Steuerleitung (61) zum Regler (18) der Verstellpumpe (16) steuert.

12. Steuervorrichtung nach Anspruch 11, dadurch gekennzeichnet, daß das am Regler (18) der Verstellpumpe (16) von einer Reglerfeder (66) verursachte Druckgefälle kleiner ist als die Summe aus dem vom Rückschlagventil (59) in der vierten Steuerleitung (57) verursachten Druckdifferenz und der aus den unterschiedlich starken Federn (27, 39) von Schließglied (26) und Entsperrkolben (36) resultierenden Druckdifferenz.

**Revendications**

1. Dispositif hydraulique de commande pour commander un cylindre de service actionné hydrauliquement, dispositif dans lequel, sur une canalisation de dérivation allant du cylindre de service au réservoir est branchée pour permettre la régulation de la pression dans le cylindre de service, une soupape incorporée à deux voies, qui, par l'intermédiaire d'une première canalisation de commande est susceptible d'être commandée par une soupape proportionnelle de commande de la pression, ce dispositif comportant des moyens pour commander la distribution entre le cylindre de service et le réservoir, et comportant un étranglement par l'intermédiaire duquel du fluide sous pression peut arriver dans la première canalisation de commande et à la soupape proportionnelle de commande de la pression, dispositif hydraulique de commande caractérisé en ce que la soupape incorporée (23) est réalisée sous la forme d'une cartouche de balance de la pression avec des surfaces frontales de pression (25, 28) de dimensions au moins approximativement identiques, balance de pression dont l'organe de fermeture (26) est susceptible d'être sollicité dans la position d'ouverture par la pression à régler dans le raccordement de service (24) et par un ressort (27), et d'être sollicité dans le sens de la position de fermeture par la pression dans la première canalisation de commande (31) et donc dans la chambre de commande (29), cependant qu'à cet organe de fermeture (26) est associé un piston de déblocage (36) sollicité par un deuxième ressort (39) et qui délimite deux chambres de pression (38, 43) reliées à une deuxième canalisation de commande (44) ou bien à une troisième canalisation de commande (38), qui sont susceptibles d'être alimentées alternativement avec du fluide sous pression de façon que lorsque le piston de déblocage (36) est couplé à l'organe de fermeture (26) le second ressort (39) plus puissant, maintient l'organe de fermeture (26) dans la position de fermeture pour la fonction de distribution, tandis que lorsque le piston de déblocage (36) est désaccouplé de l'organe de fermeture (26), la fonction de pression est susceptible d'être commandée par l'intermédiaire de la première canalisation de commande (31) à partir de la soupape proportionnelle de commande de la pression (33).

2. Dispositif hydraulique de commande selon la revendication 1, caractérisé en ce que la première surface de pression (41), sollicitée par le deuxième ressort (39), du piston de déblocage (36) est d'une dimension au moins approximativement identique à celle des surfaces de pression (25, 28) sur l'organe de fermeture (26) de la cartouche de balance de la pression (23).

3. Dispositif hydraulique de commande selon la revendication 1 ou la revendication 2, caractérisé en ce que l'étranglement (54) est placé entre la première canalisation de commande (31) et la troisième canalisation de commande (48).

4. Dispositif hydraulique de commande selon une des revendications 1 à 3, caractérisé en ce que la première canalisation de commande (31) est susceptible d'être reliée à la soupape de commande de la pression (33), tandis que la deuxième et la troisième canalisations de commande (44, 48) sont susceptibles d'être respectivement reliées, au moins par l'intermédiaire d'une soupape de commutation (45, 49) avec une canalisation (15, 53) amenant la pression d'entrée.

5. Dispositif de commande selon une ou plusieurs des revendications 1 à 4, caractérisé en ce qu'il est utilisé pour une unité d'injection (11), d'une presse d'injection de matière plastique, afin de commander différentes pressions hydrauliques dans le cylindre d'injection (12) qui actionne la vis de plastification et d'injection (13).

6. Dispositif de commande selon une des revendications 1 à 5, caractérisé en ce qu'une première soupape de commutation (32) est branchée sur la première canalisation de commande (31) et que, parallèlement à cette première canalisation de commande (31) avec la soupape de commutation (32), une quatrième canalisation de commande (57) va de la soupape de commande de la pression (33), par l'intermédiaire d'une soupape de retenue (59) s'ouvrant vers cette soupape de commande dans la première chambre de pression (38), associée au second ressort (39), du piston de déblocage (36).

7. Dispositif de commande selon une des revendications 1 à 6, caractérisé en ce que, de la chambre de pression (43), opposée au ressort (39), du piston de déblocage (36), part la troisième canalisation de commande (48) qui est susceptible d'être ouverte vers le réservoir (17) par une troisième soupape de commutation (49) ou qui est susceptible d'être alimentée par la pression régnant dans une canalisation d'arrivée (53).

8. Dispositif de commande selon une des revendications 5 à 7 caractérisé en ce que la troisième soupape de commutation (49) commande en même temps une cartouche de soupape (55) dans une canalisation d'alimentation parallèle (53) qui aboutit à un moteur hydraulique (14) pour le déplacement en rotation de la vis d'injection (13).

9. Dispositif de commande selon une des revendications 5 à 8, caractérisé en ce que, de la chambre de pression (38) associée au second ressort (39) part la deuxième canalisation de commande (44) vers une seconde soupape de commutation (45) qui peut relier la canalisation de commande (44) à un réservoir (17) ou bien à une canalisation d'alimentation (15).

10. Dispositif de commande selon une des revendications 4 à 9, caractérisé en ce que la seconde soupape de commutation (45) sert en même temps de soupape de précommande pour une soupape de fermeture (21) revêtant la forme d'une soupape incorporée à deux voies, qui est branchée sur une canalisation d'alimentation (15) aboutissant au cylindre de service (12).

11. Dispositif de commande selon une ou plusieurs des revendications 1 à 10 avec une pompe à cylindrée variable réglée en pression, dispositif caractérisé en ce que la première soupape de commutation (32) commande en même temps la cinquième canalisation de commande (61) allant au régulateur (18) de la pompe à cylindrée variable (16).

12. Dispositif de commande selon la revendication 11, caractérisé en ce que la chute de pression provoquée sur le régulateur (18) de la pompe à cylindrée variable (16) par un ressort de régulateur (66) est inférieure à la somme de la différence de pression provoquée dans la quatrième canalisation de commande (57) par la soupape de retenue (59) et de la différence de pression résultant des ressorts de force différente (27, 39) de l'organe de fermeture (26) et du piston de déblocage (36).

**Claims**

1. Hydraulic control device for controlling a hydraulically actuated working cylinder, in the branch line of which, leading from the working cylinder to the tank, is inserted a built-in two-way valve which serves for regulating the pressure in the working cylinder and which can be pilot-controlled by a proportional pressure control valve via a first control line, and with means for path control between the working cylinder and the tank as well as with a throttle point, via which a control pressure medium can enter the first control line and reach the proportional pressure-control valve, characterized in that the built-in valve (23) is designed as a pressure-balance cartridge with end pressure faces (25, 28) of at least approximately equal size, the closing body (26) of which can be loaded in the direction of the open position by the pressure to be regulated in the working connection (24) and by a spring (27) and in the direction of the shut-off position by the pressure in the first control line (31) and consequently in the control space (29), in that the closing body (26) is assigned a release piston (36) which is loaded by a second spring (39) and which limits two pressure spaces (38, 43) connected respectively to a second control line (44) and a third control line (38) and alternately subjectable to the control pressure medium in such a way that, when the release piston (36) is coupled to the closing body (26), the stronger second spring (39) keeps the closing body (26) in the shut-off position for the path function, whilst, when the release piston (36) is uncoupled from the closing body (26), the delivery function can be controlled from the proportional delivery valve (33) via the first control line (31).

2. Hydraulic control device according to Claim 1, characterized in that the first pressure face (41), loaded by the second spring (39), of the release piston (36) is at least virtually the same size as the pressure faces (25, 28) on the closing body (26) of the pressure balance cartridge (23).

3. Hydraulic control device according to Claim 1 or 2, characterized in that the throttle point (54) is located between the first control line (31) and third control line (48).

4. Hydraulic control device according to one of Claims 1 to 3, characterized in that the first control line (31) is connectable to the pressure-control valve (33), and the second and third control lines (44, 48) are connectable at least via a respective change-over valve (45, 49) to a line (15, 53) conveying the inflow pressure.

5. Control device according to one or more of Claims 1 to 4, characterized by the use, for the injection unit (11), of a plastic injection-moulding machine for controlling different hydraulic pressures in the cylinder (12) which actuates the plasticizing and injection screw (13).

6. Control device according to one of Claims 1 to 5, characterized in that a first change-over valve (32) is inserted in the first control line (31), and in that, in parallel with the first control line (31) having the change-over (32), a fourth control line (57) leads from the pressure-control valve (33), via a non-return valve (59) opening towards the latter, into the first pressure space (38) of the release piston (36) assigned to the second spring (39).

7. Control device according to one of Claims 1 to 6, characterized in that the third control line (48) starts from the pressure space (43) of the release piston (36) located opposite the spring (39) and by a third changeover valve (49) can be relieved to the tank (17) or subjected to the pressure in an inflow line (53).

8. Control device according to one of Claims 5 to 7, characterized in that the third change-over valve (49) at the same time controls a valve cartridge (55) in a parallel inflow line (53) which leads to a hydraulic motor (14) for the rotational movement of the the injection screw (13).

9. Control device according to one of Claims 5 to 8, characterized in that, from the pressure space (38) assigned to the second spring (39), the second control line (44) leads to a second change-over valve (45), and the latter can be connected to a tank (17) or to a feed line (15).

10. Control device according to one of Claims 4 to 9, characterized in that the second change-over valve (45) serves at the same time as a pilot valve for a shut-off valve (21) which is designed as a built-in two-way valve and which is inserted in a feed line (15) leading to the working cylinder (12).

11. Control device according to one or more of Claims 1 to 10 with a pressure-governed variable pump, characterized in that the first change-over valve (32) at the same time controls a fifth control line (61) to the governor (18) of the variable pump (16).

12. Control device according to Claim 11, characterized in that the pressure drop caused at the governor (18) of the variable pump (16) by a governor spring (66) is smaller than the sum of the pressure difference caused by the non-return valve (59) in the fourth control line (57) and the pressure difference resulting from the springs (27, 39) of differing strength of the closing member (26) and release piston (36).

FIG.1

FIG.2